**Europäisches Patentamt**

**European Patent Office**

**Office européen des brevets**

(19)

(11) Veröffentlichungsnummer: **0 026 324**
**B2**

# (12) NEUE EUROPÄISCHE PATENTSCHRIFT

(45) Veröffentlichungstag der neuen Patentschrift:
**02.07.86**

(21) Anmeldenummer: **80105041.0**

(22) Anmeldetag: **25.08.80**

(51) Int. Cl.⁴: **A 61 N 1/36**, H 02 H 3/00

(54) **Elektromedizinisches Reizstromgerät.**

(30) Priorität: **31.08.79 DE 2935309**

(43) Veröffentlichungstag der Anmeldung:
**08.04.81 Patentblatt 81/14**

(45) Bekanntmachung des Hinweises auf die Patenterteilung:
**15.06.83 Patentblatt 83/24**

(45) Bekanntmachung des Hinweises auf die Entscheidung
über den Einspruch:
**02.07.86 Patentblatt 86/27**

(84) Benannte Vertragsstaaten:
**AT BE CH FR GB IT LI NL SE**

(56) Entgegenhaltungen:
**DD-A-112 037**
**DD-A-129 400**
**DD-A-135 265**
**DE-A-2 558 525**
**DE-A-2 658 096**
**DE-A-2 721 757**
**DE-A-2 749 792**
**FR-A-2 332 034**
**FR-A-2 420 980**
**US-A-4 021 703**
**US-A-4 175 255**

**"Bosch-Kundendienstschrift Medizintechnik,
Reizstrom-Therapiegerät MED-MODUL,
Behandlungseinschub. DIADYN E30-10", Ausgabe
A, Dezember 1976, Seiten 2.13, 8.11 sowie Schaltbild
Einschub. DIADYN E30-10, Stromlaufplan.**

(73) Patentinhaber: **Siemens Aktiengesellschaft, Berlin
und München Wittelsbacherplatz 2, D-8000
München 2 (DE)**

(72) Erfinder: **Kusserow, Bernd, Kulmbacher Strasse 12,
D-8520 Erlangen (DE)**

EP 0 026 324 B2

LIBER, STOCKHOLM 1986

## Beschreibung

Die Erfindung bezieht sich auf ein elektromedizinisches Gerät, insbesondere Reizstromgerät, gemäß dem ersten Teil des Anspruchs 1. Ein derartiges Gerät ist aus der DD-A-129400 bekannt.

Bekannte Reizstromgeräte haben Ausgangsstufen für stromkonstanten Patientenstrom, die mit relativ hoher Betriebsspannung (bis zu einigen 100 Volt) arbeiten. Damit soll gewährleistet werden, daß auch bei extrem hohen Patientenwiderständen noch die zur Therapie bzw. Diagnostik erforderlichen Ströme mit entsprechend hohem Betriebsspannungsbedarf appliziert werden können.

Aufgrund der hohen, am Patienten anliegenden Betriebsspannungen könnte die Gefahr bestehen, daß im Störfall der durch den Patienten fließende Strom gefährlich hohe Werte annimmt. Nach VDE-Vorschriften sind deshalb für alle Reizstrom- und Diagnosegeräte besondere Schutzeinrichtungen vorgeschrieben, die den Patientenstrom in jedem möglichen Fall auf $I_{Pat} <$ 80 mA$_{eff}$ begrenzen.

Aus der DE-A-2 749 792 ist auch ein Reizstromgerät bekannt, bei dem die Schutzeinrichtung speziell darauf ausgelegt ist, daß bei durch schnelle Widerstandsänderungen bewirkten Erhöhungen des Patientenstroms der Betriebsspannungsregler des Gerätes entsprechend herabgeregelt wird. Diese Schutzeinrichtung bietet also insbesondere Schutz für einen solchen Störfall, bei dem sich die Stromzuführelektroden vom Applikationsort lösen, wobei sich die Stromübergangsfläche verkleinert, so daß die Stromdichte auf der Haut am Applikationsort sehr hohe Werte annehmen und dadurch zu unangenehmen Reizungen führen kann. Auch gegen zu schnelle Intensitätsänderungen am Intensitätseinstellglied wirkt diese Schutzeinrichtung. Dagegen greift diese bekannte Schaltung nicht ein, wenn der tatsächlich fließende Patientenstrom aufgrund von Gerätefehlern od. dgl. einen zu hohen Wert einnimmt. Reizstromgeräte des Standes der Technik weisen zu diesem Zweck im Patientenstromkreis als Schutzeinrichtung beispielsweise sog. flinke Schmelzsicherungen auf, die durch entsprechend hohe Ströme zerstört werden und damit den Stromfluß unterbrechen. Derartige Schmelzsicherungen sind allerdings bekanntlich ungenau und auch unsicher. Auch elektromagnetische Schalteinrichtungen (Relais) bewirken hier keine grundlegende Verbesserung. Sie schalten zwar schneller (im Millisekundenbereich), können aber nur Schutz vor einem vorgegebenen Überstrom geben.

Aus der DE-A-2721 757 ist ein medizinisches Niederfrequenz-Behandlungsgerät bekannt, bei dem im Betriebsspannungskreis vor dem Patientenausgang eine Serienschaltung aus einem Widerstand und einem Transistor angeordnet ist, bei dem die bei Überstrom an dem Widerstand entstehende Spannung auf die Basis des Transistors einwirkt und diesen sperrt.

Aufgabe der Erfindung ist es daher, bei elektromedizinischen Geräten eine verbesserte Schutzeinrichtung anzugeben.

Die Aufgabe wird erfindungsgemäß dadurch gelöst, daß das Umschaltsignal für die bistabile Kippstufe sowohl vom Differenzwert aus eingestelltem Intensitätswert und Meßwert des Patientenstroms als auch vom Spannungsabfall im Betriebsspannungskreis erzeugbar ist, wozu die bistabile Schaltstufe durch zwei Transistoren in Gegentaktschaltung gebildet ist, deren erster Transistor im Betriebsspannungskreis zwischen Betriebsspannungsquelle und Patientenausgang liegt und im Normalfall leitend ist, wogegen der zweite Transistor im Normalfall gesperrt ist und sowohl bei Überschreiten des maximal zulässigen Patientenstromes als auch bei Abweichen des fließenden Patientenstroms vom am Intensitätseinstellglied vorgewählte wert leitend wird und den ersten Transistor sperrt. Dabei wird die Schaltstufe aber nicht lediglich durch ein Überstromsignal gesteuert, sondern zusätzlich von einem durch Vergleich des eingestellten Sollwertes des Patientenstromes mit dem tatsächlich fließenden Strom gewonnenen Signal. Die Abweichung des Patientenstroms vom vorgewählten Sollwert bewirkt also ebenfalls ein Abschalten der Sicherheitseinrichtung. Eine solche Abweichung, die auch in einem Unterstrom bestehen kann, ist ein Anzeichen für eine Gerätestörung, so daß die Betriebsspannung auch dann unterbrochen wird, wenn noch nicht der Höchstwert des Patientenstroms zum Abschalten erreicht ist.

Bei vorzugsweiser Realisierung der Sicherheitsschaltung mit der Transistorschaltstufe wird durch Rückkopplung der Kollektor-Strecke auf die Emitter-Strecke des ersten Transistors der bistabilen Schaltstufe das Umkippen der Schaltstufe bereits im Mikrosekunden-Zeitbereich ($< 10~\mu s$) erfolgen. Dieser Zustand wird so lange beibehalten, wie Betriebsspannung anliegt. Erst durch Abschalten und anschließendes Wiederanschalten der Betriebsspannung wird der Patientenstromkreis mit ersten Transistor wieder leitend. Die Geschwindigkeit der so geschaffenen elektronischen Sicherung ist also gegenüber den bekannten Schmelzsicherungen und Schaltern um Zehnerpotenzen schneller.

Weitere Vorteile und Einzelheiten der Erfindung ergeben sich aus der nachfolgenden Figurenbeschreibung eines Ausführungsbeispiels anhand der Zeichnung in Verbindung mit den übrigen Unteransprüchen. Es zeigt

Fig. 1 ein Reizstromgerät mit Ausgangsstufe und Sicherheitsschaltung als Blockschaltbild und

Fig. 2 die erfindungsgemäße Sicherheitsschaltung.

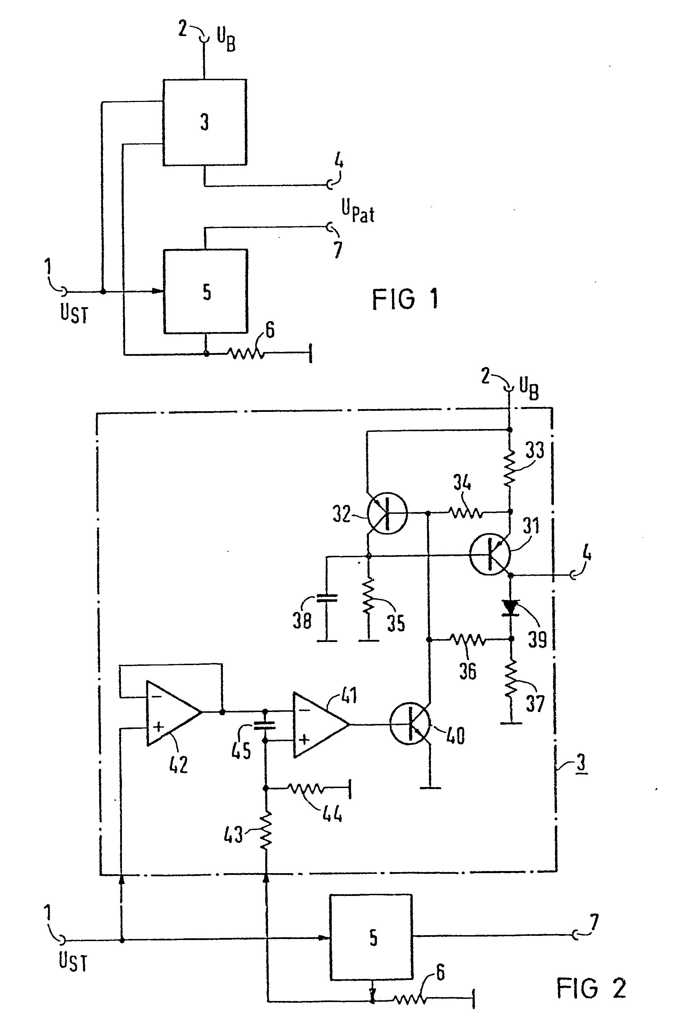

In den Fig. 1 und 2 bedeuten 1 den Anschluß der Steuerspannung eines Reizstromgerätes und 2 den Anschluß an eine Betriebsspannungsquelle. Die Betriebsspannung $U_B$ beträgt beispielsweise

+200 V.

Von einem Intensitätseinstellglied (nicht eingezeichnet) wird über den Steuereingang 1 eine dem erwünschten Patientenstrom proportionale Steuerspannung eingespeist. Es können Patientenströme beliebiger Kurvenform vorgewählt werden. Zwischen den Spannungsanschlüssen 2 und 1 und Patientenausgängen 4 und 7 ist nun einerseits als Schutzeinrichtung eine Sicherheitsschaltung 3 und andererseits eine Endstufe 5 als Stromformgenerator eingeschaltet. Von der Endstufe 5 werden aus den Steuerspannungen entsprechende Ströme erzeugt: die Endstufe 5 ist über einen definierten Widerstand 6 an Massepotential gelegt. Der über den Widerstand 6 fließende Strom entspricht dem Patientenstrom $I_{Pat}$.

Aus Fig. 1 ist erkennbar, daß das Gerät derart ausgelegt ist, daß die Sicherheitsschaltung einerseits im betriebsspannungsführenden Zweig liegt, daß sie aber andererseits auch von der Endstufe als Ausgangsstufe für den vorgewählten Patientenstrom angesteuert wird. Die nähere Funktion dieser erfindungsgemäßen Sicherheitsschaltung ist aus Fig. 2 im einzelnen ersichtlich.

Im Betriebsspannungszweig mit Anschlüssen 2 und 4 ist ein erster Transistor 31 in Emitter-Schaltung angeordnet, dessen Kollektorstrecke am Ausgang 4 liegt. Parallelgeschaltet ist ein zweiter Transistor 32 in Emitter-Schaltung, wobei die in der Emitter-Strecke des ersten Transistors 31 an einem Widerstand 33 abfallende Spannung über einen Widerstand 34 als Steuersignal an der Basis des zweiten Transistors 32 liegt. Der zweite Transistor 32 ist kollektorseitig wiederum als Steuerleitung mit der Basis des ersten Transistors 31 verbunden. Von den Transistoren 31, 32 in Gegentaktschaltung wird also eine bistabile Kippstufe gebildet. Diese Kippstufe schaltet den Patientenausgang 4 in dem einen Zustand an die Betriebsspannung $U_B$ an und in dem anderen Zustand von der Betriebsspannung $U_B$ ab. Das Steuersignal für die so gebildete Schaltstufe wird einerseits vom Wert des Patientenstromes selbst und andererseits von einem Vergleichswert des eingestellten Patientenstromes mit dem tatsächlich fließenden Strom abgeleitet. Dem zweiten Transistor 32 ist noch ein RC-Glied mit Widerstand 35 und Kondensator 38 kollektorseitig parallel geschaltet, während die Kollektorseite des ersten Transistors 31 über eine Sperrdiode und einen Spannungsteiler mit Widerständen 36 und 37 an die Emitter-Strecke des ersten Transistors rückgekoppelt ist.

Die Steuerleitung für den zweiten Transistor 32 ist über einen dritten Schalttransistor 40 an den Ausgang eines Komparators 41 angeschlossen. An die Eingänge des Komparators 41 wird einerseits die am Intensitätseinstellglied eingestellte Steuerspannung $U_{St}$ und andererseits eine dem tatsächlich fließenden Patientenstrom $I_{Pat}$ entsprechende Spannung gegeben. Vom Steuereingang 1 ist dazu die Steuerspannung über einen rückgekoppelten Operationsverstärker 42 niederohmig auf den invertierenden Eingang des Komparators 41 angeschaltet. Auf den anderen Eingang ist die über den definierten Widerstand 6 abfallende Spannung, die dem Patientenstrom proportional ist, angeschlossen. Uber einen Spannungsteiler mit Widerständen 43 und 44 ist diese Spannung um einen vorgebbaren Wert, beispielsweise 20% abgesenkt. Beide Eingangsleitungen des Komparators 41 sind über einen Kondensator 45 gekoppelt. Durch den Kondensator 45 wird bei Einstellen eines Intensitätswertes als Sollwert die Steuerspannung zunächst auf die zweite Leitung übergekoppelt. Dadurch wird bewirkt, daß am Komparator 41 tatsächlich die effektiv vorliegenden Stromintensitäten verglichen werden und nicht lediglich aufgrund von Phasenverschiebungen bei sich ändernden Stromformen ein Ausgangssignal erzeugt wird.

Beim Betrieb des Reizstromgerätes mit der beschriebenen Sicherheitsschaltung ist im Normalfall der erste Transistor 31 leitend, so daß die Betriebsspannung über der Emitter-Kollektor-Strecke am Patientenausgang 4 liegt. Über die Endstufe 5 wird der vorgewählte Strom erzeugt und an den anderen Patientenausgang 7 gelegt.

Steigt nun der Strom über den sicherheitsbedingten Grenzwert von 80 mA an, so steigt entsprechend der Spannungsabfall am Widerstand 33. Ist dieser Spannungsabfall größer als die Basis-Emitter-Spannung des Transistors 32, geht Transistor 32 in den leitenden Zustand über, wobei von der Kollektorstrecke die Basis des ersten Transistors 31 angesteuert wird. Dadurch wird Transistor 31 gesperrt; die Sicherung hat ausgelöst.

Aufgrund der Rückkopplung über den Widerstand 36 erfolgt das Umkippen der durch die Transistoren gebildeten bistabilen Schaltstufe und Sperren des ersten Transistors 31 sehr schnell. Es werden Werte <10 µs erzielt. Die Sperrung von Transistor 31 wird so lange beibehalten wie die Betriebsspannung $U_B$ anliegt. Nach Abschalten der Betriebsspannung $U_B$ wird die Kollektorstrecke des Transistors 32 über das RC-Glied 35, 38 entladen. Mit Wiedereinschalten der Betriebsspannung befindet sich die Schaltstufe dann immer in dem Zustand, bei der der erste Transistor 31 durchgesteuert, d. h. Sicherung also leitend ist.

Mit dem Komparator 41 wird während des Betriebs des elektromedizinischen Gerätes ständig der Spannungsabfall am Widerstand 6, der nach vorgewähltem Maß vermindert ist, mit der Steuerspannung $U_{St}$ verglichen. Wenn also der Patientenstrom der am Intensitätseinstellglied vorgewählten Wert beispielsweise um 20% überschreitet, kippt der Komparator 41 und wird das Ausgangssignal des Komparators 41 dem Steuersignal für den zweiten Transistor 32 aufaddiert. Es wird so der zweite Transistor 32 ebenfalls durchgeschaltet und demzufolge der erste Transistor 31 wiederum gesperrt.

Im Ausführungsbeispiel nach Fig. 2 ist ein Operationsverstärker als Komparator 41 speziell so geschaltet, daß lediglich Patientenstromwerte, die größer als der gewählte Sollwert sind, zur zusätzlichen Aktivierung der Sicherheitsschaltung führen. Durch Schaltung eines weiteren Operationsverstärkers mit umgekehrter Polarität bzw. Verwendung eines Fensterdiskriminators anstelle des Komparators 41 können sämtliche Abweichungen erfaßt und als Steuersignale für die bistabile Schaltstufe mit Transistoren 31 und 32 verwendet werden.

Die durch die beschriebene Schaltung gebildete Sicherung tritt also in jedem Fall auch dann in Funktion, wenn der Patientenstrom zwar noch unterhalb des zulässigen Maximalstromes liegt, aber vom am Intensitätseinstellglied vorgewählten Wert abweicht. Damit ist ein besonders wirksamer Schutz des Patienten gegen Störungen des Reizstromgerätes geschaffen.

**Patentansprüche**

1. Elektromedizinisches Gerät, insbesondere Reizstromgerät, mit einer Ausgangsstufe (5) als Stromformgenerator für stromkonstanten Reizstrom und einer der Ausgangsstufe zugeordneten Schutzeinrichtung (3), die einen der Patientenausgänge (4) von der Betriebsspannung ($U_B$) dann abschaltet, wenn der Patientenstrom einen an einem Intensitätseinstellglied eingestellten Sollwert übersteigt, wozu die Schutzeinrichtung einen Komparator (41) zum Istwert-/Sollwertvergleich des Patientenstroms und eine vom Komparator gesteuerte bistabile Kippstufe (31 -34) aufweist, die den Patientenausgang in dem einen Zustand an die Betriebsspannung anschaltet und in dem anderen Zustand von der Betriebsspannung abschaltet, dadurch gekennzeichnet, daß das Umschaltsignal für die bistabile Kippstufe (31 − 34) sowohl vom Differenzwert aus eingestelltem Intensitätswert und Meßwert des Patientenstroms als auch vom Spannungsabfall im Betriebsspannungskreis erzeugbar ist, wozu die bistabile Schaltstufe durch zwei Transistoren (31, 32) in Gegentaktschaltung gebildet ist, deren erster Transistor (31) im Betriebsspannungskreis zwischen Betriebsspannungsquelle (2) und Patientenausgang (4) liegt und im Normalfall leitend ist, wogegen der zweite Transistor (32) im Normalfall gesperrt ist und sowohl bei Überschreiten des maximal zulässigen Patientenstromes als auch bei Abweichen des fließenden Patientenstroms vom am Intensitätseinstellglied vorgewählten Sollwert leitend wird und den ersten Transistor (31) sperrt.

2. Elektromedizinisches Gerät nach Anspruch 1, dadurch gekennzeichnet, daß im Betriebsspannungskreis dem ersten Transistor (31) ein erster definierter Widerstand (33) vorgeschaltet ist, wobei die an diesem Widerstand (33) abfallende Spannung über einen weiteren Widerstand (34) als Steuersignal auf den zweiten Transistor (32) angeschaltet ist.

3. Elektromedizinisches Gerät nach Anspruch 1, dadurch gekennzeichnet, daß von der Ausgangsstufe (5) der Patientenstrom über einen zweiten definierten Widerstand (6) zur Masse abfließt, wobei die an diesem Widerstand (6) abfallende Spannung als Bezugsgröße für den Patientenstrom im Komparator (41) mit der Steuerspannung für die Ausgangsstufe (5) verglichen wird.

4. Elektromedizinisches Gerät nach Anspruch 3, dadurch gekennzeichnet, daß der Komparator ein Operationsverstärker (41) ist, an dessen invertierenden Eingang die Steuerspannung für die Ausgangsstufe (5) und an dessen nicht invertierenden Eingang die dem Patientenstrom proportionale Spannung liegt.

5. Elektromedizinisches Gerät nach Anspruch 3, dadurch gekennzeichnet, daß als Komparator ein Fensterdiskriminator vorgesehen ist.

6. Elektromedizinisches Gerät nach Anspruch 3, dadurch gekennzeichnet, daß der dem Patientenstrom proportionale Spannungsabfall am Widerstand (6) mittels Spannungsteiler (43, 44) um einen definierten Wert, vorzugsweise um 20%, abgesenkt ist.

7. Elektromedizinisches Gerät nach Anspruch 3, dadurch gekennzeichnet, daß die Steuerspannung für die Ausgangsstufe (5) über einen rückgekoppelten Operationsverstärker (42) niederohmig an den Komparator (41) angeschaltet ist.

8. Elektromedizinisches Gerät nach einem der Ansprüche 5 bis 7, dadurch gekennzeichnet, daß die Eingangsleitungen des Komparators (41 über einen Kondensator (45) gekoppelt sind.

9. Elektromedizinisches Gerät nach Anspruch 1, dadurch gekennzeichnet, daß das Komparatorsignal einen dritten Transistor (40) durchschaltet, über den das Komparatorsignal dem Steuersignal für den zweiten Transistor (32) aufaddiert ist.

10. Elektromedizinisches Gerät nach Anspruch 1, dadurch gekennzeichnet, daß dem zweiten Transistor (32) ein RC-Glied (35, 38) parallel geschaltet ist.

11. Elektromedizinisches Gerät nach einem der vorhergehenden Ansprüche, dadurch gekennzeichnet, daß die Steuerleitung des zweiten Transistors (32) über einen Spannungsteiler (36, 37) auf den Betriebsspannungskreis rückgekoppelt ist, wobei in der Verbindung zur Betriebsspannungsleitung eine Diode (39) eingeschaltet ist.

**Claims**

1. Elektro-medical apparatus, in particular an electroconvulsive therapy apparatus, comprising an output stage (5) with a controlled-current generator for providing a constant excitation current and a protection device (3) assigned to the output stage which disconnects one of the patient output terminals (4) from the operating voltage (UB) whenever the patient current exceeds a theoretical value which is set on an intensity adjustment component, for which purpose the protective device possesses a comparator (41) for the actual value/theoretical value comparison of the patient current, and a bistable trigger stage (31-34) which is controlled by the comparator and which in the one state connects the patient output to the operating voltage and in the other disconnects the patient output from the operating voltage, characterised in that the switch-over signal for the bistable trigger stage (31 -34) can be generated both from the difference value of the set intensity value and the measurement value of the patient current, and from the voltage drop in the operating voltage circuit, for which purpose the bistable switching stage is formed by two transistors (31, 32) connected in puch-pull, the first of which transistors (31) is located in the operating voltage circuit between the operating voltage source (2) and the patient output terminal (4) and is normally conductive, whereas the second transistor (32) is normally blocked and becomes conductive to block the first transistor (31) in the event of both an overshooting of the maximum permissible patient current and a deviation in the flowing patient current from the theoretical value preselected on the intensity adjustment component.

2. Electro-medical apparatus as claimed in Claim 1, characterised in that in the operating voltage circuit the first transistor (31) is preceded by a first determinate resistor (33), the voltage drop across this resistor (33) being applied via a further resistor (34), to the second transistor (32) as a control signal.

3. Electro-medical apparatus as claimed in Claim 1, characterised in that the patient current flows from the output stage (5) across a second determinate resistor (6) to earth, and the voltage drop across this resistor (6) serves as a reference value of the patient current, and is compared in the comparator (41) with the control voltage for the output stage (5).

4. Electro-medical apparatus as claimed in Claim 3, characterised in that the comparator consists of an operational amplifier (41) whose inverting input is connected to the control voltage for the output stage (5) and whose non-inverting input is connected to the voltage which is proportional to the patient current.

5. Electro-medical apparatus as claimed in Claim 3, characterised in that a window-discriminator is provided as the comparator.

6. Electro-medical apparatus as claimed in Claim 3, characterised in that the voltage drop across the resistor (6), which is proportional to the patient current, is reduced by a determinate amount, preferably by 20%, by means of a voltage divider (43, 44).

7. Electro-medical apparatus as claimed in Claim 3, characterised in that the control voltage for the output stage (5) is connected to the comparator (41) via an operational amplifier (42) having feedback to present a low impedance.

8. Electro-medical apparatus as claimed in one of Claims 5 to 7, characterised in that the input lines of the comparator (41) are coupled by a capacitor (45).

9. Electro-medical apparatus as claimed in Claim 1, characterised in that the comparator signal switches through a third transistor (40), by means of which the comparator signal can be added to the control signal for the second transistor (32).

10. Electro-medical apparatus as claimed in Claim 1, characterised in that an RC-element (35, 38) is connected in parallel to the second transistor (32).

11. Electro-medical apparatus as claimed in one of the preceding Claims, characterised in that the control line of the second transistor (32) is fed back to the operating voltage circuit by means of a voltage divider (36, 37), a diode (39) being interposed in the connection to the operating voltage line.

## Revendication

1. Appareil électromédical, notamment appareil à courant de stimulation, qui comporte un étage de sortie (5), en tant que générateur d'ondes de courant, pour des courants de stimulation constants, et un dispositif de protection (3), associé à l'étage de sortie, qui déconnecte une des sorties (4) du patient de la tension de service ($U_B$), lorsque le courant du patient dépasse une valeur de consigne réglée au niveau d'un organe de réglage d'intensité, le dispositif de protection comportant à cet effet un comparateur (41) pour la comparaison de la valeur réelle et de la valeur de consigne du courant du patient et une bascule bistable (31-34) qui est commandée par le comparateur et qui, dans un état, relie la sortie du patient à la tension de service et, dans l'autre état, la déconnecte de la tension de service, caractérisé par le fait que le signal de commutation pour la bascule bistable (31-34) peut être produit aussi bien par la valeur de différence entre la valeur d'intensité réglée et la valeur mesurée du courant de patient, que par la chute de tension dans le circuit de tension de service, la bascule bistable étant à cet effet formée par deux transistors (31, 32) en montage symétrique, dont le premier (31) se trouve dans le circuit de tension de service, entre la source (2) de tension de service et la sortie (4) du patient et est conducteur en fonctionnement normal, alors que par contre le second transistor (32) est bloqué en fonctionnement normal et devient conducteur, en bloquant le premier transistor (31), lors du dépassement du courant de patient maximal admissible d'une part et lorsque le courant de patient circulent diffère de la valeur de consigne présélectionnée au niveau de l'orange de réglage d'intensité d'autre part.

2. Appareil électromédical suivant la revendication 1, caractérisé par le fait qu'une première résistance définie (33) est branchée en amont du premier transistor (31), la chute de tension au niveau de cette résistance (33) étant appliquée, en tant que signal de commande, au second transistor (32), par l'intermédiaire d'une autre résistance (34).

3. Appareil électromédical suivant la revendication 1, caractérisé par le fait que le courant du patient s'écoule vers la masse, par l'intermédiaire d'une seconde résistance définie (6) à partir de l'étage de sortie (5), la chute de tension au niveau de cette résistance (6) étant comparée, en tant que grandeur de référence pour le courant de patient, avec la tension de commande pour l'étage de sortie (5), dans le comparateur (41).

4. Appareil électromédical suivant la revendication 3, caractérisé par le fait que le comparateur est un amplificateur opérationel (41), sur l'entrée inverseuse duquel est appliquée la tension de commande pour l'étage de sortie (5) et sur l'entrée non inverseuse duquel est appliquée la tension proportionnelle au courant du patient.

5. Appareil électromédical suivant la revendication 3, caractérisé par le fait qu'on utilise un discriminateur à fenêtres en tant que comparateur.

6. Appareil électromédicai suivant la revendication 3, caractérisé par le fait que la chute de tension aux bornes de la résistance (6), qui est proportionnelle au courant du patient, est réduite, au moyen d'un diviseur de tension (43, 44), d'une valeur définie, de préférence de 20%.

7. Appareil électromédical suivant cation 3, caractérisé par le fait que la tension de commande pour l'étage de sortie (5) est appliquée de façon faiblement ohmique au comparateur (41) par l'intermédiaire d'un amplificateur opérationnel (42) à contre-réaction.

8. Appareil électromédical selon l'une des revendications 5 à 7, caractérisé par le fait que les conducteurs d'entrée du comparateur (41) sont couplés par l'intermédiaire d'un condensateur (45).

9. Appareil électromédical selon la revendication 1, caractérisé par le fait que le signal du comparateur commande dans son état passant un troisiéme transistor (40) par l'intermédiaire duquel le signal du comparateur est susceptible d'être additionné avec le signal de commande pour le second transistor (32).

10. Appareil électromédical selon la revendication 1, caractérisé par le fait qu'en parallèle sur le second transistor (32) est branché un circuit RC (35, 38).

11. Appareil électromédical selon l'une des revendications précédentes, caractérisé par le fait que le conducteur de commande de second transistor (32) est relié à contre-réaction avec le circuit de tension de service, une diode (39) étant montée dans la liaison menant au conducteur de tension de service.

FIG 1

FIG 2